# EUROPÄISCHE PATENTANMELDUNG

(11) **EP 1 260 398 A2**
(43) Veröffentlichungstag der Anmeldung: **27.11.2002**
(21) Anmeldenummer: 02009632.7
(22) Anmeldetag: 27.04.2002
(51) Int. Cl.: B60K 15/04

(54) **Entlüftungssystem eines Kraftfahrzeug-Kraftstofftanks**

(30) Priorität: 26.05.2001 DE 10125821; 10.08.2001 DE 10139507
(71) Anmelder: Bayerische Motoren Werke Aktiengesellschaft, 80809 München (DE)
(72) Erfinder: Bigalke, Manfred, 85591 Vaterstetten (DE); Spengler, Carsten, 80807 München (DE)

(57) **Zusammenfassung**

Die Erfindung betrifft ein Entlüftungssystem eines Kraftfahrzeug-Kraftstofftanks, wobei in einem Tank-Einfüllstutzen (1) eine Tank-Entlüftungsleitung (4) mit der Kraftstoff-Strömungsrichtung (3) im wesentlichen parallel und gleichgerichtet mündet. Hierdurch kann der Impuls des in der Entlüftungsleitung (4) strömenden Gasvolumenstroms genutzt werden, um einen eventuellen Druckanstieg im Einfüllstutzen (1) bzw. im sog. Fixiertopf desselben zu kompensieren. Dabei kann die Mündungsöffnung (5) der Entlüftungsleitung (4) eine in den Einfüllstutzen (1) eingesteckte Tank-Zapfpistole (2) im wesentlichen ringförmig umgeben. Ferner kann der Leitungswiderstand des zum HC-Adsorptionsfilter führenden Abschnittes der Tank-Entlüftungsleitung im Verhältnis zum Leitungswiderstand des zum Einfüllstutzen (1) führenden Abschnitts der Tank-Entlüftungsleitung (4) derart ausgelegt sein, dass beim Befüllen des Kraftstofftanks maximal 70% des aus dem Tank verdrängten Gasvolumens durch das HC-Adsorptionsfilter geführt wird. Vorgesehen sein kann weiterhin eine Maßnahme zur Beschleunigung der Gasströmung in der Tank-Entlüftungsleitung (4), insbesondere in Form eines venturi-artigen Querschnitts des Einfüllstutzens oder der Tank-Entlüftungsleitung.

## Beschreibung

Die Erfindung betrifft ein Entlüftungssystem eines Kraftfahrzeug-Kraftstofftanks, wobei in einem Tank-Einfüllstutzen eine Tank-Entlüftungsleitung mündet. Zum technischen Umfeld wird beispielshalber auf die DE 199 36 105 A1 verwiesen.

Für die gesetzliche Zulassung von Kraftfahrzeugen ist es wichtig, dass hinsichtlich der HC-Emmissionen beim Betanken der Fahrzeuge die festgelegten Grenzwerte nicht überschritten werden. Insbesondere gilt es hierbei auch, zu vermeiden, dass Kohlenwasserstoff-Dämpfe aus dem Einfüllstutzen heraus unter Passieren der darin eingesteckten Tank-Zapfpistole in nennenswertem Umfang in die Umgebung gelangen.

Beim einem Tank-Vorgang, d.h. beim Befüllen des Kfz-Kraftstofftanks wird naturgemäß ein relativ großes Gasvolumen aus dem Kraftstofftank verdrängt, wobei dieses Gasvolumen einen hohen Anteil von Kohlenwasserstoffen (HC) enthält. Ein Teil des aus dem Tank verdrängten Gasvolumens wird üblicherweise über eine Entlüftungsleitung in einen als HC-Adsorptionsfilter wirkenden Aktivkohlefilter eingeleitet. Da dieser jedoch nur eine begrenzte Menge von Kohlenwasserstoffen zwischenspeichern kann, wird ein Teil des beim Befüllen des Kraftstofftanks mit Kraftstoff aus dem Tank verdrängten Gasvolumens über eine andere Entlüftungsleitung bzw. über einen Zweig derselben in den Tank-Einfüllstutzen eingeleitet, und zwar in den oberen Bereich des Einfüllstutzens, insbesondere in den sog. Fixiertopf. Von dort kann diese mit Kohlenwasserstoffen durchsetzte Luftmasse entweder von einer in der Tank-Zapfpistole vorgesehenen Absaugvorrichtung abgesaugt oder wieder in den Tank "mitgerissen" werden, und zwar von dem aus der Tank-Zapfpistole abgegebenen Kraftstoffstrom. Dies hat den positiven Effekt, dass die beim Betanken des Kraftfahrzeugs aus der Umgebung in den Tank mitgenommene Frischluftmenge reduziert wird. Grundsätzlich soll auf die beschriebene Weise vermieden werden, dass Kohlenwasserstoffdämpfe aus dem Einfüllstutzen bzw. aus dem sog. Fixiertopf in die Umgebung gelangen.

Es hat sich jedoch gezeigt, dass abhängig von der Geometrie sowie den Abmessungen des Einfüllstutzens nur relativ geringe Luftmengen über die Tank-Entlüftungsleitung in den Fixiertopf bzw. Einfüllstutzen eingebracht werden können. Größere Luftmengen führen dort zu einer unerwünschten Druckerhöhung, die zur Folge haben kann, dass HC-Emissionen in die Umgebung stattfinden.

Hiermit soll daher ein gegenüber dem bekannten Stand der Technik verbesserter Einfüllstutzen nach dem Oberbegriff des Anspruchs 1 aufgezeigt werden (= Aufgabe der vorliegenden Erfindung).

Die Lösung dieser Aufgabe ist dadurch gekennzeichnet, dass die Tank-Entlüftungsleitung mit der Kraftstoff-Strömungsrichtung im Einfüllstutzen im wesentlichen parallel und gleichgerichtet mündet. Vorteilhafte Weiterbildungen sind Inhalt der Unteransprüche.

Die Erfindung geht von der Erkenntnis aus, dass der Druck in einem Fluid eine skalare Größe ist und folglich ungerichtet im Raum wirkt, wohingegen der Impuls, der sich aufgrund von Dynamik ergibt, definiert gerichtet ist. Nun wird bislang der Gasvolumenstrom aus der Tank-Entlüftungsleitung im wesentlichen senkrecht zur Einfüllstutzen-Wand bzw. senkrecht zur Strömungsrichtung des im Einfüllstutzen strömenden Kraftstoffstromes in den Einfüllstutzen eingeleitet. Nachteilig an dieser bisher üblichen Anordnung ist, dass der Impuls des in der Tank-Entlüftungsleitung geführten Gasvolumenstroms hierbei nicht genutzt wird bzw. nicht genutzt werden kann.

Wird hingegen - wie mit der vorliegenden Erfindung vorgeschlagen - der durch die Tank-Entlüftungsleitung in den Einfüllstutzen eingeleitete HC-Gasvolumenstrom im wesentlichen parallel sowie gleichgerichtet zur Hauptströmungsrichtung in diesem Einfüllstutzen in Richtung zum KraftstoffTank ausgerichtet, so kann der Impuls des aus der Tank-Entlüftungsleitung austretenden Gasvolumenstroms dazu genutzt werden, dass in diesem Bereich eine Vergrößerung der Saugstrahlwirkung auftritt bzw. dass der in diesem Bereich des Einfüllstutzens (bzw. Fixiertopfes) herrschende Druck reduziert wird. Somit wird sicher vermieden, dass aus diesem Abschnitt heraus HC-Emissionen in die Umgebung erfolgen.

Im Sinne einer vorteilhaften Weiterbildung kann die Mündungsöffnung der Tank-Entlüftungsleitung eine in den Einfüllstutzen eingesteckte Tank-Zapfpistole im wesentlichen ringförmig umgeben. Dies bewirkt, dass das über die Entlüftungsleitung in den Einfüllstutzen eingeleitete Gasvolumen vom durch die Tank-Zapfpistole zugeführten Kraftstoffstrom wesentlich verstärkt in Richtung des Tanks mitgerissen wird, so dass grundsätzlich eine größere Menge von Gas über diese im Einfüllstutzen mündende Entlüftungsleitung quasi entsorgt werden kann. Als Folge hiervon wird zunächst die Belastung des Aktivkohlefilters bzw. HC-Adsorptionsfilters verringert. Ein besonderer Vorteil dieses Vorschlags ist ferner darin zu sehen, dass gegenüber dem vorbeschriebenen Stand der Technik eine noch größere Menge von bereits mit HC belastetem Gas in den Tank eingeführt wird, so dass die Menge von beim Betanken mitgerissener Frischluft noch weiter verringert wird. Wenn aber bereits mit Kohlenwasserstoffen belastetes Gas anstelle von Frischluft in den Tank gelangt, so wird in diesem die Tendenz zur Kraftstoffverdampfung vorteilhafterweise herabgesetzt.

In diesem Zusammenhang sei darauf hingewiesen, dass dadurch, dass ein größerer Teil des aus dem Tank beim Befüllen desselben verdrängten Gasvolumens über den Einfüllstutzen wieder in den Tank zurück geführt wird, zumindest ein Teil des daraufhin wieder aus dem Tank verdrängten Gasvolumenstromes quasi im Kreislauf geführt wird, so dass auch hierdurch die beim Betanken des Kraftfahrzeugs aus der Umgebung in den Tank mitgenommene Frischluftmenge und insbesondere auch die dem HC-Adsorptionsfilter zugeführte, mit Kohlenwasserstoffen belastete Gasmenge reduziert wird.

Zusätzlich zu den vorgeschlagenen Maßnahmen können weitere Maßnahmen zur Beschleunigung der Gasströmung in der Tank-Entlüftungsleitung vorgesehen sein, um den gewünschten Effekt noch weiter zu steigern. So kann die die Tank-Entlüftungsleitung selbst einen Venturi-Querschnitt aufweisen und/oder in einem venturi-artigen Querschnitt des Einfüllstutzens münden.

Ehe bevorzugte Ausführungsbeispiele mit einer erfindungsgemäß in einem Tank-Einfüllstutzen mündenden Entlüftungsleitung beschrieben werden, sei noch ein weiterer Vorschlag erläutert, der beinhaltet, dass der Leitungswiderstand des zum HC-Adsorptionsfilter führenden Abschnittes der Tank-Entlüftungsleitung im Verhältnis zum Leitungswiderstand des zum Einfüllstutzen führenden Abschnitts der Tank-Entlüftungsleitung derart ausgelegt ist, dass beim Befüllen des Kraftstofftanks maximal 70% des aus dem Tank verdrängten Gasvolumens durch das HC-Adsorptionsfilter geführt wird. Auch hiermit kann an einem Kraftfahrzeug-Kraftstofftank, in dessen Einfüllstutzen eine Tank-Entlüftungsleitung mündet und wobei ein Zweig der Tank-Entlüftungsleitung in ein HC-Adsorptionsfilter (bspw. Aktivkohlefilter) geführt ist, die benötigte Größe des HC-Adsorptionsfilters reduziert werden, bzw. es kann in denjenigen Sonderfällen, in denen die Dimensionierung des Adsorptionsfilters nicht ausreicht, sämtliche hindurchgeführte Kohlenwasserstoffe zwischenzuspeichern, die Belastung der Umwelt mit Kohlenwasserstoff-Emissionen während des Betankens des Kraftfahrzeugs noch weiter reduziert werden.

Wenn nämlich wie angegeben die Strömungswiderstände in den einzelnen Entlüftungsleitungen - dieses sind die sog. Leitungswiderstände - in Relation zueinander derart festgelegt sind, dass gegenüber der heute üblichen Auslegung über der gesamten Leitungslänge betrachtet der Strömungswiderstand der vom Tank zum HC-Adsorptionsfilter (bzw. durch dieses hindurch) führenden Entlüftungsleitung vergrößert und der Strömungswiderstand der vom Tank zum Tank-Einfüllstutzen führenden Entlüftungsleitung verringert wird, so wird (aufgrund des verringerten Leitungswiderstandes) gegenüber dem heutigen Stand der Technik automatisch eine größere Menge des beim Betanken aus dem Tank verdrängten Gases zum Einfüllstutzen gelangen und dementsprechend (aufgrund des vergrößerten Leitungswiderstandes) eine geringere Menge dem HC-Adsorptionsfilter zugeführt. Damit wird die Gefahr einer Überladung des HC-Adsorptionsfilters deutlich herabgesetzt. Eine Überladung des HC-Adsorptionsfilters mit Kohlenwasserstoffen hätte nämlich zur Folge, dass durch dieses Filter hindurch Kohlenwasserstoffe in die Umgebung gelangen würden, da diese nicht im Filter zwischengespeichert werden könnten. Die vorgeschlagene Maßnahme, die sich durch geeignete Gestaltung der Leitungsquerschnitte, d.h. bspw. durch Einsetzen von Blenden oder dgl. einfach umsetzen lässt, führt also dazu, dass beim Betanken eines Kraftfahrzeugs ein möglichst großer Anteil des hierbei aus dem Kraftstofftank verdrängten Gasvolumens auf die beschriebene Weise quasi im Kreis geführt wird. Wie im Patentanspruch angegeben sollen dann maximal 70% des aus dem Tank verdrängten Gasvolumens in bzw. durch das HC-Adsorptionsfilter gelangen.

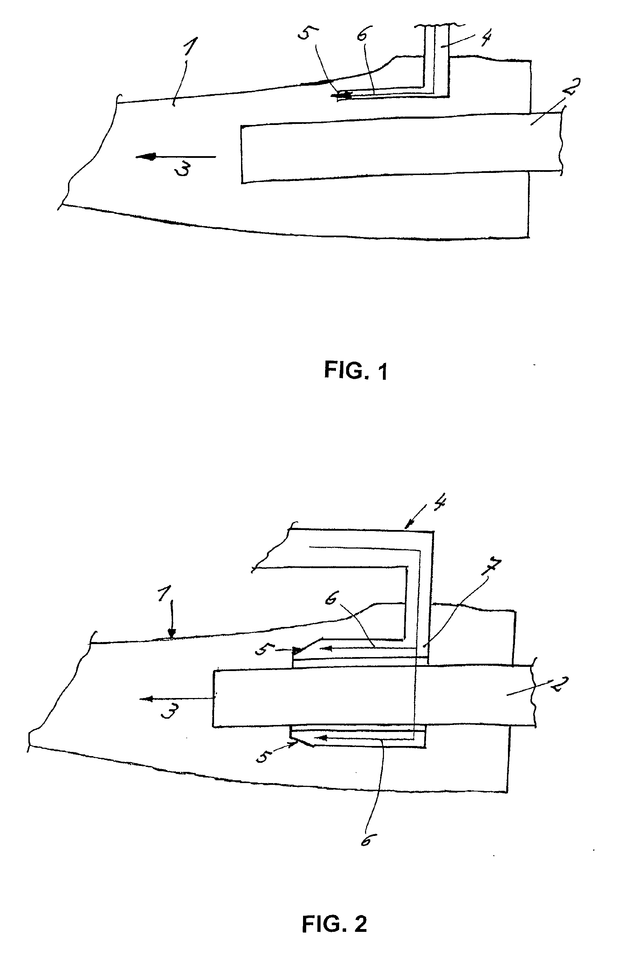

Die letztgenannten Maßnahmen gehen aus den beigefügten und im folgenden erläuterten Prinzipskizzen bevorzugter Ausführungsbeispiele der Erfindung nicht hervor, jedoch geben diese **Figuren 1, 2,** in denen gleiche Elemente mit den gleichen Bezugsziffern bezeichnet sind, die vorgeschlagene Anordnung der Tank-Entlüftungsleitung im Einfüllstutzen eines Kraftfahrzeugs jeweils in einem Längsschnitt gut wieder.

So ist mit der Bezugsziffer 1 der im wesentlichen übliche Einfüllstutzen eines Kfz.-Kraftstofftanks bezeichnet, in welchem eine lediglich symbolhaft dargestellte Tank-Zapfpistole 2 eingeführt werden kann, um aus dieser den nicht dargestellten Kraftstofftank gemäß der Hauptströmungsrichtung 3 mit Kraftstoff zu befüllen. Bekanntermaßen wird hierbei aus dem Kraftstofftank ein Gasvolumenstrom verdrängt, von welchem ein Teil in ein nicht dargestelltes Aktivkohlefilter und der weitere Teil über eine Tank-Entlüftungsleitung 4, von welcher lediglich der Mündungsabschnitt figürlich dargestellt ist, in den Einfüllstutzen 1 eingeleitet wird. Letzteres erfolgt im oberen bzw. äußeren Endbereich des Einfüllstutzens 1 (dem sog. Fixiertopf), um eine nutzbare Saugstrahlwirkung zu erzielen, und dadurch zu verhindern, dass nennenswerte HC-Emissionen in die Umgebung erfolgen.

Wie ersichtlich mündet die Tank-Entlüftungsleitung 4 im wesentlichen parallel sowie gleichgerichtet zur sog. Hauptströmungsrichtung 3 bzw. zur Kraftstoff-Strömungsrichtung im Einfüllstutzen 1. Durch eine einfache Umlenkung um hier 90° in der Tank-Entlüftungsleitung 4 ist - wie das Ausführungsbeispiel nach **Fig.1** zeigt - diese Maßnahme einfach umsetzbar. Dabei ist selbstverständlich ist auch eine strömungsgünstigere Gestaltung der Tank-Entlüftungsleitung 4 möglich. Stets kann mit dieser Lage der Mündung der Tank-Entlüftungsleitung 4 der Impuls des aus dieser Mündungsöffnung 5 der Tank-Entlüftungsleitung 4 austretenden Gasvolumenstromes 6 dazu genutzt werden, den Druck im oberen Bereich des Einfüllstutzens 1 bzw. des sog. Fixiertopfes zu reduzieren, so dass durch den austretenden Gasvolumenstrom 6 dort ein gegenüber dem bekannten Stand der Technik reduziertes Druckniveau erreicht wird. Vorteilhafterweise kann durch die entsprechende Einleitung in den oberen bzw. äußeren Endbereich des Einfüllstutzens 1 eine nutzbare Saugstrahlwirkung erzielt werden, um hiermit zu verhindern, dass größere Mengen von Umgebungsluft in den Einfüllstutzen 1 und somit in den Tank mitgerissen werden, die anschließend das Aktivkohlefilter unnötigerweise belasten würden.

Beim Ausführungsbeispiel nach **Fig.2** umgibt die Mündungsöffnung 5 der Entlüftungsleitung 4 die in den Einfüllstutzen 1 eingesteckte Tank-Zapfpistole 2 im wesentlichen ringförmig. Hierzu ist in der Entlüftungsleitung 4 kurz stromauf der Mündungsöffnung 5 ein quasi Ringverteiler 7 vorgesehen, d.h. die zunächst einfache Entlüftungsleitung 4 geht im Ringverteiler 7 in ein ringförmiges Leitungsstück über, das eine in den Einfüllstutzen 1 eingesteckte Tank-Zapfpistole 2 ringförmig umgibt, so dass auch die Mündungsöffnung 5 dieser dann ringförmigen Entlüftungsleitung 4 die Tank-Zapfpistole 2 ringförmig umgibt. Mit dieser Lage der Mündungsöffnung 5 wird vom aus der Tank-Zapfpistole 2 austretenden Kraftstoffstrom eine große Menge von Gas aus der Mündungsöffnung 5 und somit aus der Entlüftungsleitung 4 in Hauptströmungsrichtung 3 mitgerissen. Vorteilhafterweise wird mit dieser Anordnung auch sicher vermieden, dass ein Teil des aus der Tank-Entlüftungsleitung 4 austretenden Gasvolumenstromes 6 in die Umgebung gelangt. Selbstverständlich ist auch hier eine strömungsgünstigere Gestaltung der Tank-Entlüftungsleitung 4 möglich, wie überhaupt eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Entiüftungssystem eines Kraftfahrzeug-Kraftstofftanks, wobei in einem Tank-Einfüllstutzen (1) eine Tank-Entlüftungsleitung (4) mündet,
**dadurch gekennzeichnet, dass** die Tank-Entlüftungsleitung (4) mit der Kraftstoff-Strömungsrichtung (3) im Einfüllstutzen (1) im wesentlichen parallel und gleichgerichtet mündet.

2. Entlüftungssystem nach Anspruch 1,
**dadurch gekennzeichnet, dass** die Mündungsöffnung (5) der Entlüftungsleitung (4) eine in den Einfüllstutzen (1) eingesteckte Tank-Zapfpistole (2) im wesentlichen ringförmig umgibt.

3. Entlüftungssystem nach Anspruch 1 oder 2,
**dadurch gekennzeichnet, dass** der Leitungswiderstand des zum HC-Adsorptionsfilter führenden Abschnittes der Tank-Entlüftungsleitung im Verhältnis zum Leitungswiderstand des zum Einfüllstutzen (1) führenden Abschnitts der Tank-Entlüftungsleitung (4) derart ausgelegt ist, dass beim Befüllen des Kraftstofftanks maximal 70% des aus dem Tank verdrängten Gasvolumens durch das HC-Adsorptionsfilter geführt wird.

4. Entlüftungssystem nach einem der vorangegangenen Ansprüche, **gekennzeichnet durch** eine Maßnahme zur Beschleunigung der Gasströmung in der Tank-Entlüftungsleitung (4), insbesondere in Form eines venturi-artigen Querschnitts des Einfüllstutzens (1) oder der Tank-Entlüftungsleitung (4).
